# EUROPEAN PATENT SPECIFICATION

(11) **EP 1 786 860 B1**
(45) Date of publication and mention of the grant of the patent: **26.03.2008**
(21) Application number: 05779826.6
(22) Date of filing: 24.08.2005
(51) Int. Cl.: C08K 5/00, C08K 5/1535

(54) **IN-CAN STABILIZERS**
IN-CAN STABILISATOREN
STABILISANTS EN RECIPIENT

(30) Priority: 03.09.2004 EP 04104248
(43) Date of publication of application: 23.05.2007
(60) Divisional application: 07118127.5
(73) Proprietor: Ciba Specialty Chemicals Holding Inc., 4057 Basel (CH)
(72) Inventor: NESVADBA, Peter, CH-1723 Marly (CH); FUCHS, André, 79418 Schliengen-Obereggenen (DE); ILG, Stephan, CH-4304 Giebenach (CH); PIGHETTI, Edith, CH-4102 Binningen (CH)
(86) International application number: PCT/EP2005/054146
(87) International publication number: WO 2006/024621

(56) References cited:
- WO-A-01/83455
- WO-A-03/054073
- WO-A-03/076505
- WO-A-03/085039
- US-A1- 2003 000 129
- US-A1- 2003 073 762
- US-A1- 2004 002 559

## Description

The present invention relates to the use of highly sterically hindered nitroxyl radicals as in-can stabilizers for UV-curable resins.

UV-curable inks and varnishes have been one of the fastest growing technologies In the past two decades. This growth is forecast to continue well into the future with the development of new applications for UV curing, such as inks for food packaging. New raw materials are required to ensure that UV-technology can meet the challenging demands of low odor and low migration, low yellowing while maintaining high reactivity.

The UV-curable resins are composed of a monofunctional or multifunctional monomer, oligomer or polymer molecule and a photoinitiating compound. Monomers, oligomers or polymers typically used for UV curing have at least one ethylenically unsaturated group like an acrylate or methacrylate functional groups. Polymerization is achieved by exposure to UV radiation.

UV-curable resins frequently have to be stabilised against undesired polymerisation or crosslinking of the ethylenically unsaturated group in order that they have adequate storage stability without reducing the cure-speed when radiated.
The stabilizers should be compatible with a wide range of commercially available oligomers such as epoxy-, urethane-, polyester- and acrylate- systems.

In the prior art, for example in WO01/42313, there are proposed for that purpose sterically hindered nitroxyl radicals of 2,2,6,6-tetramethylpiperidine in general. Examples of typical radical scavenger that prevent the geling of UV curable compositions while having minimal impact on curing speed are bis(1-oxy-2,2,6,6-tetramethylpiperidin-4-yl) sebacate (Irgastab® UV 10) and 4-hydroxy-1-oxy-2,2,6,6-tetramethylpiperidine.

The problem underlying the present invention is therefore to provide In-can stabilizers which are radical scavengers that have a high affinity to radicals formed in UV curable resins containing ethylenically unsaturated monomers, oligomers and/or polymers and a photoinitiator during storage without reducing the cure-speed when radiated and which radical scavengers prevent the geling of UV curable resins and thus increase the storage stability throughout their life cycle from manufacturing to curing compared to the state of art stabilizers, especially in pigmented systems. Some pigments, for instance orange, green and black pigments are known to have a negative influence on the storage stability. A specific problem occurs when Orange 34 is used.

It has now been found that this problem is solved by adding to the ethylenically unsaturated monomer-, oligomer- or polymer molecules stable highly sterically hindered nitroxyl radicals,

The present invention relates to the use of stable highly sterically hindered nitroxyl radicals selected from
2,6-diethyl-2,3,6-trimethyl-4-hydroxypiperidine-1-oxyl, 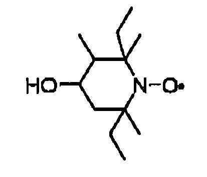 2,6-diethyl-2,3,6-trimethyl-4-oxopiperldlne-1-oxyl, 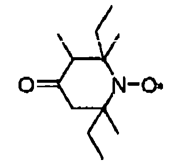 7,9-diethyl-6,7,9-trimethyl-1,4-dioxe-B-aza-spiro[4.5]decan-8-oxyl, 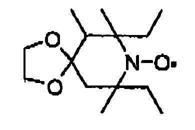 octadecanoic acid 3,8,10-triethyl-7,8,10-trimethyl-1,5-dioxa-9-aza-spiro[5,5]undec-3-ylmethyl ester-9-oxyl, 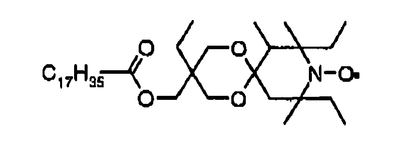 1-t-butyl-3,3,5,5-tetraethyl-piperazin-2-on-4-oxyl, 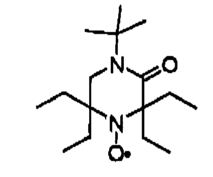 1-t-octyl-3,3-diethyl-5,5-dimethyl-piperazin-2-on-4-oxyl, 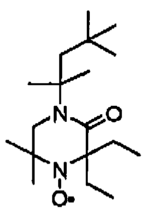 tert-butyl-(1-dietylphosphono-2,2-dimethyl)-amine-N-oxyl, 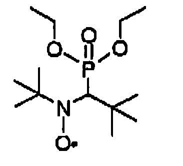 as in-can stabilizer for UV curable pigmented or unpigmented urethane resins, acrylic resins, polyester resins, and epoxy resins.

By the term "**highly sterically hindered"** is meant that ring nitroxyl radicals are more hindered than ring nitroxyl radicals having 4 methyl groups in the alpha position to the N-atom, for example more hindered than TEMPO (2,2,6,6-tetramethylpiperidinyl-1-oxy-radical).

By the term "in can stabilizer" is meant a stabilizer that improves the storage stability.
In-can stabilizers are radical scavengers that have a high affinity to radicals formed in UV curable resins during storage without reducing the cure-speed when radiated. In-can stabilizers prevent the geling of UV curable resins and thus increase the storage stability throughout their life cycle from manufacturing to curing.

By the term "**UV-curable resin"** Is meant a coating or ink which achieves the desired degree of hardness upon exposure to ultraviolet radiation. This occurs due to the presence of a photoinitiating compound which absorbs UV light (light of wavelength from about 200 nm to about 600 nm), generates a free radical, and causes polymerization or cross-linking of functional groups on resin monomers, oligomers or polymers.

The UV curable resin is a pigmented or unpigmented urethane resins, acrylic resins, polyester resins, and epoxy resins. These resins are known in the art. Pigmented systems are preferred.

Among those resins especially inks and overprint varnishes are stabilized. Inks are especially offset inks, Printing Ink and overprint varnish formulations are well known. Examples of suitable formulations are described, for example in "Printing Ink and Overprint Varnish Formulations" (2nd Edition), published by William Andrew Publishing/Noyes, 1999, which are incorporated by reference herein.

Suitable photoinitiators are known to those skilled in the art.
For example, α-hydroxyketones and α-aminoketones, phenylglyoxalates or phospinoxides are photoinitiators commonly used in graphic arts applications.

Especially preferred are, for example, the following commercially available photoinitiators:
Darocur 1173: 2-hydroxy-2-rnethyl-1-phenyl-1-propanone (HMPP) and Oligomeric HMPP,
Irgacure 184: 1-hydroxy-cyclohexyl-phenylketone,
Irgacure 2959: 2-hydroxy-1-[4-(2-hydroxyethoxy)phenyl]-2-methyl-1-propanone,
Irgacure 369; 2-benzyl-2-(dimethylamino)-1-[4-(4-morpholinyl)phenyl]-1-butanone,
Irgacure 1300: Irgacure 369 + Irgacure 651 (benzildimethylketal),
Irgacure 379: 2-(4-Methylbenzyl)-2-(dimethylamino)-1-[4-(4-morpholinyl)phenyl]-1-butanone,
Irgacure 127: 2-Hydroxy-1-{4-[4-(2-hydroxy-2-methyl-propionyl)-benzyl]-phenyl}-2-methylpropan-1-one,
Irgacure 754: oxo-phonyl-acatic acid 1-methyl-2-[2-(2-oxo-2-phenyl-acetoxy)-propoxy]-ethyl ester,
Irgacure 819; bis(2,4,6-trimethylbenzoyl)-phenylphosphine oxide,
Irgacure 2100: a mixture of Irgacure 819 and Lucerin TPO (2,4,6-Trimethylbenzoyl-phenyl phosphinic acid ethyl ester),
lrgacure 2022: a mixture of Irgacure 819 and Lucerin TPO and Darocur 1173,
lrgacur 250: 4-isobutylphanyl-4'-mothylphenyl iodonium hexafluorophosphate,
Darocur ITX: 2-isopropylthloxanthone and 4-isopropylthioxanthone,
Darocur EDB: ethyl-4-dimethylamino benzoate,
Darocur EHA: 2-athylhexyl-4-dimethylamino benzoate.

The above examples of photoinitiators are not limiting.

Pigments which may be used in the invention include organic and inorganic pigments, alone or In combination. The exact choice of pigments will depend upon the specific application and performance requirements such as color reproduction and image stability. Pigments suitable for use in the present invention include, for example, azo pigments, monoazo pigments, disazo pigments, azo pigment lakes, beta-Naphthol pigments, Naphthol AS pigments, benzimidazolone pigments, disazo condensation pigments, metal complex pigments, isoindolinone and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, diketopyrrolo pyrrole pigments, titanium oxide, iron oxide, and carbon black. Typical examples of pigments which may be used include Color Index (C.I.) Pigment Yellow 1, 2, 3, 5, 6, 10, 12, 13, 14, 16, 17, 62, 65, 73, 74, 75, 81, 83, 87, 90, 93, 94, 95, 97, 98, 99, 100, 101, 104, 106, 108, 109, 110, 111, 113, 114, 116, 117, 120, 121, 123, 124, 126, 127, 128, 129, 130, 133, 136, 138, 139, 147, 148, 150, 151, 152, 153, 154, 155, 165, 166, 167, 168, 169, 170, 171, 172, 173, 174, 175, 176, 177, 179, 180, 181, 182, 183, 184, 185, 187, 188, 190, 191, 192, 193, 194; C.I. Pigment Orange 1, 2, 5, 6, 13, 15, 16, 17, 17:1, 19, 22, 24, 31, 34, 36, 38, 40, 43, 44, 46, 48, 49, 51. 69, 60, 61, 62, 64, 65, 66, 67, 68, 69; 0.1. Pigment Red 1, 2, 3, 4, 5, 6, 7, 8, 9, 10, 11, 12, 13, 14, 15. 16, 17, 18, 21, 22, 23, 31, 32, 38, 48:1, 48:2, 48:3. 48:4, 49:1, 49:2, 49:3, 50;1, 51, 52:1. 52:2, 53:1, 57:1, 60:1, 63:1, 66, 67, 68, 81, 95, 112, 114, 119, 122, 136, 144, 146, 147, 148, 149, 150, 151, 164, 166, 168, 169, 170, 171, 172, 175, 176, 177, 178, 179, 181, 184, 165, 187, 188, 190, 192, 194, 200, 202, 204, 206, 207, 210, 211, 212, 213, 214, 216, 220, 222. 237, 238, 239, 240, 242, 243, 245, 247, 248, 251, 252, 253, 254, 255, 256, 258. 261, 264; C.I. Pigment Violet 1, 2, 3, 5:1, 13, 19, 23, 25, 27, 29, 31, 32, 37, 39, 42, 44, 50; C.I. Pigment Blue 1, 2, 9, 10, 14, 15:1, 15:2, 15:3, 15:4, 15:6, 15, 16, 18, 19, 24:1, 25, 56, 60, 61, 62, 63, 64, 66; C.I. Pigment Green 1, 2, 4, 7, 8, 10, 36, 45; C. 1. Pigment Black 1, 7, 20, 31, 32, and C.I. Pigment Brown 1,5, 22, 23, 25, 38, 41, 42. In a preferred embodiment of the invention, the pigment employed is C.I. Pigment Blue 15:3, C.I. Pigment Red 122, C,I. Pigment Yellow 155, C.I. Pigment Yellow 74, bis(phthalocyanylalumlno)tetraphenyJdisiloxane or C.I. Pigment Black 7.

If desired, the resin composition of the present invention can further contain additives commonly employed in the art.

The stabilizer also increases the storage stability of a coating or an ink composition which does not contain a photoinitiator. The storage stabilisation of resins not containing a photoinitiator is especially important if a reactive binder such as an amine acrylate is present.

The stabilizer is added in an amount of from 0.0001 to 10% by weight, based on the total amount of coating composition or ink composition, preferably 0.01 to 5%.

Highly sterically hindered nitroxyl radicals as well as acrylic resins containing them are known per se and are described for various applications in the prior art.

A well known application is the use as flame retardant. WO03/054073 WO03/07605 and WO 03/085039 describe acrylic resins containing highly sterically nitroxyl radicals and their use as flame retardants, The use to increase the storage stability is not disclosed therein.

US 6,518,326 (Ciba) relates to compounds of formulae

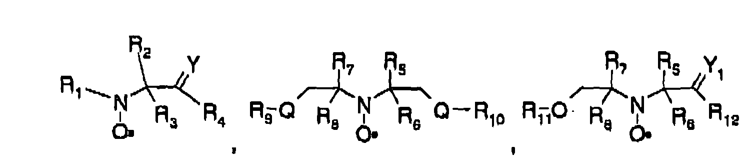

These compounds may be used together with a radical source to effect polymerization of ethylenically unsaturated monomers or oligomers.

WO96/24620 (Elf Atochem) describes compounds of the formula 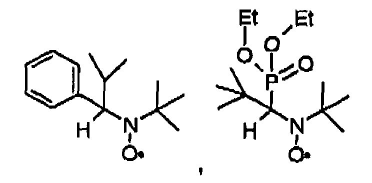 used for controlled polymerization of ethylenically unsaturated monomers.

US 6,353,107 (Ciba describes sterically highly hindered piperidine nitoxldes 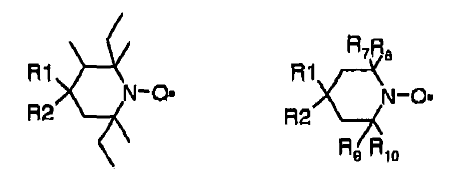 used for controlled polymerisation.

WO20022048205 (Ciba) describes compounds of the formula 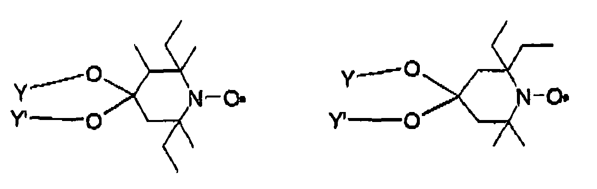 used for controlled polymerisation.

US6,479,608 (Ciba) describes compounds of the formulae 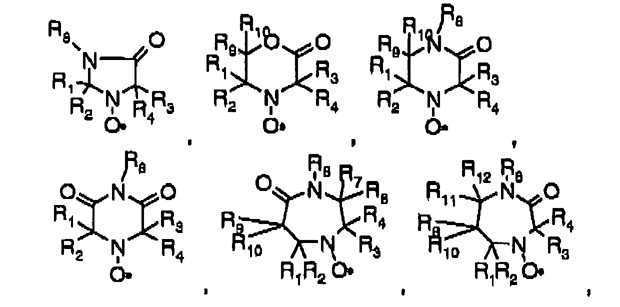 used for controlled polymerisation.

### Application examples

### Preparation of the tested In-can stabilizers

### a) compound of the formula IIa, prepared according to US6,353,107

### Example 1

2,6-diethyl-2,3,6-trimethyl-4-hydroxypiperidine-1-oxyl

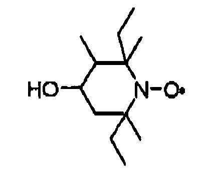

To a solution of 118.2g (0.6mol) 2,6-diethyl-2,3,6-trimethyl-4-oxopiperidine In 1000ml ethanol 18.2g (0.4 mol) sodium borohydride are added In portions and the temperature is kept below 30 °C. Subsequently the solution is stirred for 2 hours at 50°C. Ethanol is distilled off, 500 ml water are added to the residue which is subsequently extracted several times with CH₂Cl₂. The extract is dried over Na₂SO₄ and the solution is filtered. After removing the solvent 116g (97%) 2,6-diethyl-2,3,6-trimethyl-4-hydroxypiperidin are obtained as yellowish liquid.
Elemental analysis calculated for C₁₂H₂₅NO: C 72,31%; H 12.64%; N 7.03%, Found: C 71.44%; H 12,71%; N 6.87%.

To a solution of 25.7g (0.13 mol) 2,6-diethyl-2,3,6-trimethyl-4-hydroxypiperidine in 120 ml tetrahydrofurane a solution of a solution of 54.5g (0,22 mol) m-chlor-perbenzoic acid (70%) In 230 ml tetrahydrofurane is droppwise added under stirring within 2 hours at 0°C. The red to brown solution is stirred over night at room temperature and 500 ml hexane, are added. The solution is neutralized by shaking several times with 1 N NaHCO₃ and finally with water. The solvent is evaporated and 27.0g (97%) 2,6-diethyl-2,3,6-trimethyl-4-hydroxypiperidine-1-oxyl are obtained as red liquid,
Elemental analysis calculated for C₁₂H₂₄NO₂; C 67.25%; H 11.29%; N 6.54%. Found: C 67.10%; H 11.42%; N 6.68%.

### Example 2

2,6-diethyl-2,3,6-trimethyl-4-oxopiperidine-1-oxyl

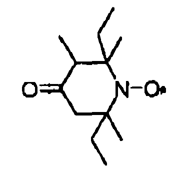

2,6-diethyl-2,3,6-trimethyl-4-oxopiperidine is prepared in analogy to example 1 by oxidizing 16g (0,08 mol) 2,6-diethyl-2,3,6-trimethyl-4-oxopiperidine with m-chlor-perbenzoic acid. 10g 2,6-diethyl,2,3,6-trimethyl-4-oxypiperidine-1-oxyl are obtained as red liquid.
Elemental analysis calculated for C₁₂H₂₂NO₂: C 67.89%; H 10.44%; N 6.60%. Found: C 68.00%; H 10.42%; N 6.61%.

### b) compounds of the formula IIa prepared according to WO20002048205

### Example 3

7,9-Diethyl-6,7,9-trimethyl-1,4-dioxa-8-aza-spiro[4.5]decan-8-oxyl

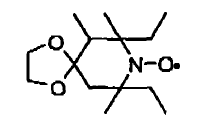

According to Example 5 in US4,105,626 8-aza-6,7,9-trimethyl-7,9-diethyhl-1,4-dioxaspiro [4.5]decane are dissolved in 100 ml methylene chloride. Into this solution is dropped a solution of 42.6 g of m-chloroperbenzoic acid in 300 ml methylene chloride within 2 hours. The reaction mixture becomes red and m-chlorobenzoic acid is precipitating gradually. After stirring the mixture for 12 hours the precipitate is filtered off by suction. The filtrate is washed with 200 ml of 2 n sodium hydroxide followed by 200 ml of water. After drying over sodium sulfate the methylene chloride is evaporated and the residue is distilled in vacuo. At 120.degree. C at 0.65 mm Hg there distills pure 8-aza-6,7,9-trimethyl-7,9-diethyl-1,4-dioxaspiro[4.5]decane-8-oxyl

### Example 4

octadecanoic acid 3,8,10-triethyl-7,8,10-trimethyl-1,5-dioxa-9-aza-spiro[5.5]undec-3-ylmethyl ester-9-oxyl

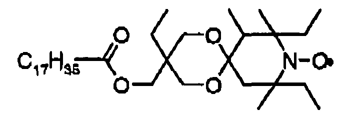

The title compound is prepared by oxidizing octadecanoic acid 3,8,10-triethyl-7,8,10-trimethyl-1,5-dioxa-9-aza-spiro[5,5]undec-3-yl-methyl ester (prepared In analogy to US 4,105,626, Example 4) as a red oil. MS (Cl): MH⁺=595 (C₃₆H₆₈NO₅ = 594.95).

### c) compound of the formula IIb, prepared according to US6,479,608,

### Example 5

1-t-Butyl-3,3,5,5-tatraethyl-piperazin-2-on-4-oxyl

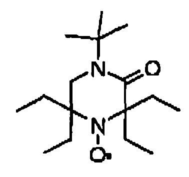

40 g (1 mol) of finely ground NaOH are added, with stirring, to a solution of 0.189 mol of 1.1-diethyl-2-t-butylaminoethylamin, (prepared In accordance with M. Senkus.: J,Am. Chem. Soc. 68, 10 (1946)) and 25 ml (0.3 mol) of chloroform in 250 ml of diethyl ketone at 10 °C. The reaction mixture is stirred for 16 hours at room temperature and is then filtered. The filtrate, concentrated by evaporation in a rotary evaporator, is chromatographed over silica gel with hexane/ethyl acetate (3:2). The pure fractions are concentrated by evaporation, to give 1-t-butyl-3,3,5,5-tetraethyl-piperazin-2-on (52%) as a yellow oil.

The compound is transformed into the title compound as red crystals, m.p. 34-37 °C. 45,3 g (0.2 Mol) of raw compound are dissolved In 450 ml of ethylacetate and 51.1 ml (0.3 Mol) of peracetic acid (39% in acetic acid) are added to the stirred solution under cooling within 20 minutes. The solution is stirred for another 2.5 hours, then diluted with 100 ml of hexane and washed with NaHCO₃ solution till neutral. The title compound is obtained after evaporation of hexane, chromatography of the residue on Silica gel with hexane-EtOAc (5:1) and crystallization from pentane.

### Example 6

1-t-octyl-3,3-diethyl-5,5-dimethyl-piperazin-2-on-4-oxyl

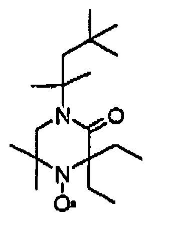

In analogy to Example 5 1,1-dimethyl-2-t-octylaminoethylamin, diethyl keton, chloroform and NaOH are reacted to give 1-t-octyl-3,3-diethyl-5,5-dimethyl-piperazin-2-on compound as a yellow oil.

0.4 g of sodium tungstate, 2 g of sodium carbonate and then, at 10 °C, 27.5 ml of hydrogen peroxide (35%, in water) are added to a solution of 0.064 mol of 1-t-octyl-3,3-diethyl-5,5-dimethyl-piperazin-2-on in 50 ml of methanol. The reaction mixture is stirred for 40 hours at room temperature and is then diluted with 100 ml of saturated NaCl solution and extracted with 5 x 50 ml of methyl-tert-butyl ether. The extracts are dried over MgSO₄, concentrated by evaporation and chromatographed over silica gel with hexane/ ethyl acetate (3:1). The pure fractions are concentrated by evaporation, giving the title compound as red crystals, m.p. 54-56 °C.

### Example 7:

tert-butyl-(1-dietylphosphono-2,2-dimethyl)-amine-N-oxyl 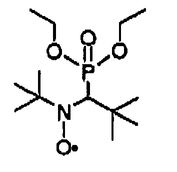 prepared as described in WO96/24620.

Two technical parameters of the new stabilizers were tested:
**1.** Stabilization efficiency at 70 °C
   **a)** in TMPTA (Trimethylolpropane triacrylate) which contains 5% photoinitiator IRGACURE 369 (2-benxyl-2-(dimethylamino)-1-[4-(4-morpholinyl)phenyl]-1-butanone)
   **b)** in UV-curable offset Ink, which contains Pigment Orange 34.
**2.** Influence of the presence of the new In-can stabilizer on the curing efficiency of blue UV-curable offset ink.

### Experimental details

### Storage stability of TMPTA

5 g IRGACURE 369 were added to 95 g TMPTA (UCB) and stirred to give a clear, yellowish solution with an initiator concentration of 5 wt-%, 0.1 g stabilizer were added to the solution and stirred until the substance was dissolved completely. 2 ml of the solutions were filled into 2.5 ml-analytical vials and placed In a drying oven (2 samples per substance and concentration). The samples were stored at 70 °C and the polymerization (usually starting at the bottom, to the top) was checked visually (reported as days until the polymerization started).

### Storage stability of orange offset Ink

0.2 g of a TMPTA solution containing 2.5 wt-% stabilizer were added to 5.0 g of a commercial orange offset ink (w/o previously added stabilizer) and were distributed homogeneously in a muller. 2.4 g of the Ink were filled into a weighing container (glass, diameter 13 mm) and placed in a drying oven. The samples were stored at 70 °C and the polymerization of the ink (usually starting at the bottom, to the top) was checked with a spatula (reported as days until the polymerization started).

### Influence of the stabilizer on the curing efficiency of a blue offset Ink

For the assessment of the influence on curing efficiency, a blue UV offset ink was selected as appropriate testing system.

Composition of the blue offset ink:

| **Weight (g)** | **Raw material** | **Remark** |
|---|---|---|
| 18.3 | Ebecryl 1608 (UCB) | Diluted epoxyacrylate in GPTA |
| 18.3 | Ebecryl 657 (UCB) | Polyester tetraacrylate |
| 20.0 | Ebecryl 220 (UCB) | Aromatic urethane hexaacrylate |
| 20.9 | Ebecryl 150 (UCB) | Diluting epoxyacrylate |
| 22.5 | Irgalite Blue GLO (Ciba) | Copper phthalocyanine pigment (β-form) |
| 6.0 | Irgacure 1300 (Ciba) | Fotoinitiator (Irgacure 369 + Irgacure 651 benzildimethylketal) |
| 106.0 | Total formulation | |

0.2 g of a TMPTA solution containing 2.5 wt-% stabilizer were added to 5.0 g of the blue offset ink and were distributed homogeneously in a muller. The inks were printed with a Prüfbau multipurpose printability tester on white Lumiart paper (1.5 g/m²) and were exposed to the radiation of one medium-pressure mercury lamp, at 150 W/cm in an UV curing unit from IST-Metz. The through cure (line speed in m/min) and the surface cure (y/n) of the ink were assessed after the exposure.

### Results

| Stabilizer | Concentration [Wt-%] | Start of TMPTA polymerization at 70°C [days] | Start of polymerization of orange offset ink at 70 °C [days] | Line speed for curing of blue offset ink [m/min] |
|---|---|---|---|---|
| References | | | | |
| Blank | - | 1-2 | 3 | 130 |
| Florstab UV-1¹ | 1.0² | 13 | >24 | 120 |
| Irgastab UV10³ | 0.1 | 18 | 3 | 90 |
| Nitroxyl radicals | | | | |
| 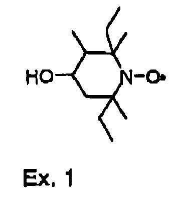 | 0.1 | >33 | >24 | 100 |
| 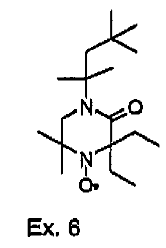 | 0.1 | >33 | >24 | 100 |
| 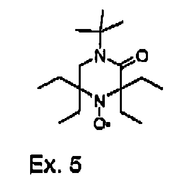 | 0.1 | >33 | >24 | 110 |
| 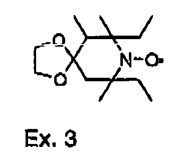 | 0.1 | >33 | >24 | 90 |
| 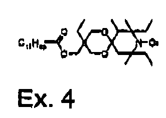 | 0.1 | >33 | >24 | 120 |
| 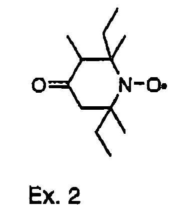 | 0.1 | >15 | >15 | 80 |
| 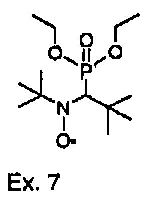 | 0.1 | (not tested) | >25 | 100 |

| | | | | |
|---|---|---|---|---|
| 1) Kromachem. 2) Commonly used concentration of Florstab UV1 in UV inks. 3) Irgastab UV 10 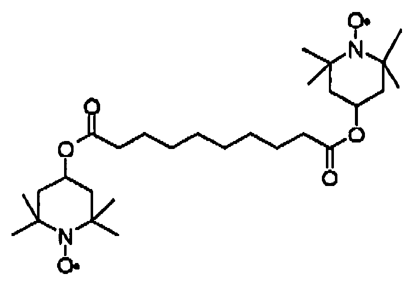 Ciba Specialty Chemicals, | | | | |

The high sterically hindered nitroxyl radicals show a higher stabilization effect like the commercial products Florstab UV1 and Irgastab UV10, in particular in the TMPTA / irgacure 369 mixture. They have no or only a small negative Influence on the curing efficiency of the blue offset Ink.

## Claims

1. The use of stable highly sterically hindered nitroxyl radicals selected from
2,6-diethyl-2,3,6-trimethyl-4-hydroxypiperidine- 1-oxyl, 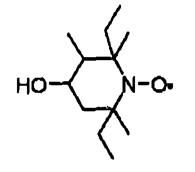 2,6-diethyl-2,3,6-trimethyl-4-oxopiperidine-1-oxyl, 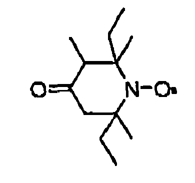 7,9-diethyl-6,7,9-trimethyl-1,4-dioxa-8-aza-spiro[4.5]decan-8-oxyl, 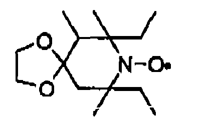 octadecanoic acid 3,8,10-triethyl-7,8,10-trimethyl-1,5-dioxa-9-aza-spiro-[5,5]-undec-3-ylmethyl ester-9-oxyl, 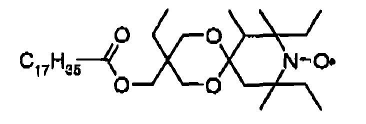 1-t-butyl-3,3,5,5-tetraethyl-piperazin-2-on-4-oxyl, 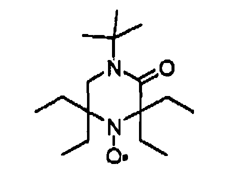 1-t-octyl-3,3-diethyl-5,5-dimethyl-piperazin-2-on-4-oxyl, 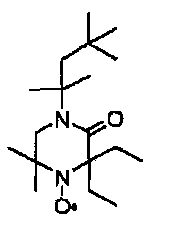 tert-butyl-(1-dietylphosphono-2,2-dimethyl)-amine-N-oxyl, 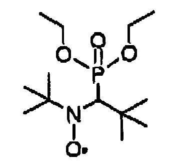 as in-can stabilizer for UV curable pigmented or unpigmented urethane resins, acrylic resins, polyester resins, and epoxy resins.

2. The use of stable highly sterically hindered nitroxyl radicals according to claim 1 as inc- can stabilizer for overprint varnishes and inks.

## Patentansprüche

1. Verwendung von stabilen, stark sterisch gehinderten Nitroxylresten, ausgewählt aus 2, 6-Diethyl-2 , 3 , 6-trimethyl-4-hydroxypiperidin-1-oxyl , 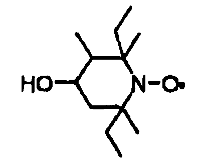 2, 6-Diethyl-2,3, 6-trimethyl-4-oxopiperidin-1-oxyl, 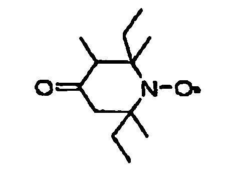 7,9-Diethyl-6,7,9-trimethyl-1,4-dioxa-8-aza-spiro[4.5]decan-8-oxyl, 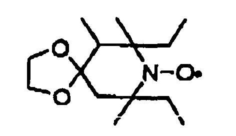 Octadecansäure-3,8,10-triethyl-7,8,10-trimethyl-1,5-dioxa-9-aza-spiro [5.5] undec-3-ylmethylester-9-oxyl, 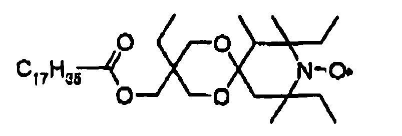 1-t-Butyl-3, 3, 5, 5-tetraethyl-piperazin-2-on-4-oxyl, 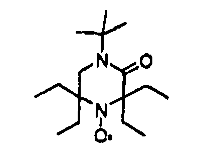 1-t-Octyl-3,3-diethyl-5,5-dimethyl-piperazin-2-on-4-oxyl, 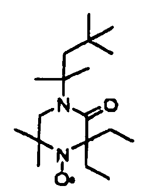 tert-Butyl-(1-diethylphosphono-2,2-dimethyl)-amin-N-oxyl, 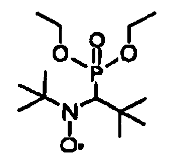 als In-can-Stabilisator für UV-härtbare pigmentierte oder unpigmentierte Urethanharze, Acrylharze, Polyesterharze und Epoxidharze.

2. Verwendung von stabilen, stark sterisch gehinderten Nitroxylresten nach Anspruch 1 als In-can-Stabilisator für Überdrucklacke und Druckfarben.

## Revendications

1. Utilisation de radicaux nitroxyle stables à fort encombrement stérique choisis parmi
le 2,6-diéthyl-2,3,6-triméthyl-4-hydroxypipéridine-1-oxyle, 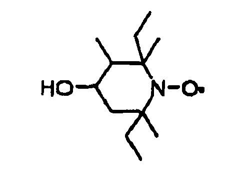 le 2,6-diéthyl-2,3,6-triméthyl-4-oxypipéridine-1-oxyle, 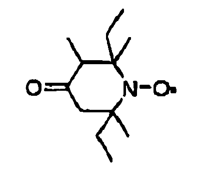 le 7,9-diéthyl-6,7,9-triméthyl-1,4-dioxa-8-azaspiro[4.5]décan-8-oxyle, 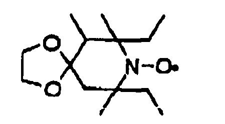 le 3,8,10-triéthyl-7,8,10-triméthyl-1,5-dioxa-9-azaspiro[5.5]undéc-3-ylméthylester-9-oxyle d'acide octadécanoïque 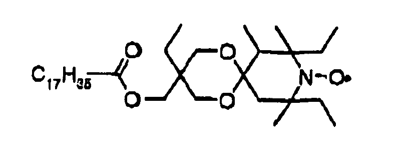 le 1-t-butyl-3,3,5,5-tétraéthyl-pipérazine-2-on-4-oxyle, 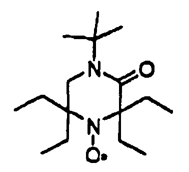 le 1-t-octyl-3,3-diéthyl-5,5-diméthyl-pipérazine-2-on-4-oxyle, 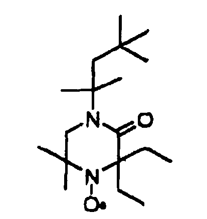 le tert-butyl-(1-diéthylphosphono-2,2-diméthyl)-amine-N-oxyle, 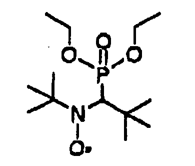 en tant que stabilisant pour intérieur de boîte métallique pour résines uréthanne, résines acryliques, résines polyester et résines époxy pigmentées ou non pigmentées durcissables aux UV.

2. Utilisation de radicaux nitroxyle stables à fort encombrement stérique selon la revendication 1 en tant que stabilisant pour intérieur de boîte métallique pour vernis de surimpression et d'encres.
